# EUROPEAN PATENT SPECIFICATION

(11) **EP 2 737 787 B1**
(45) Date of publication and mention of the grant of the patent: **25.11.2015**
(21) Application number: 12194719.6
(22) Date of filing: 29.11.2012
(51) Int. Cl.: A01D 34/125, A01D 34/49, A01D 34/71

(54) **Rotary lawnmower**
Drehrasenmäher
Tondeuse à gazon rotative

(43) Date of publication of application: 04.06.2014
(73) Proprietor: ROBERT BOSCH GMBH, 70442 Stuttgart (DE)
(72) Inventor: Taylor, Jon, Illington, Norfolk IP24 1RS (GB); Ling, Matthew, Ipswich, Suffolk IP6 8QR (GB)

(56) References cited:
- EP-A1- 2 499 894
- DE-U1- 9 411 192
- US-A- 3 423 918
- US-A1- 2010 115 901

## Description

The present invention relates to a rotary lawnmower in which a cutting deck housing defines a cutting chamber which has an aperture through which grass cuttings are ejected from the cutting chamber in use.

US-A1-2010/115901 discloses a walk behind lawn mower comprising a housing with a cutting chamber, an aperture and a deflector which deflector is movable under a resilient biasing force from an open position in which cuttings are undeflected on their path from aperture to a deflecting position in which cuttings are deflected on their path from the aperture.

In such lawnmowers, it is known to provide a hinged safety flap or deflector guard at the rear of the lawnmower, mounted above the outlet aperture. The deflector has two positions, depending on whether a grass collection device is fitted. If a grass collection device is fitted, the deflector will be in a fully-open position, usually horizontal and resting on the top of the grass collection device under a resilient biasing force provided by a spring. The aperture in the cutting deck will therefore be in full, direct communication with the inside of the grass collection device. If the grass collection device is not fitted, the resilient biasing force on the deflector will cause it to move downwards to a deflecting position which is reached when the deflector comes to a stop. In this position, the deflector is angled downwards, over the mouth of the aperture so that the aperture is partially closed but a small opening is provided to the ground. In this position, the grass cuttings are deflected to the ground.

It would be desirable to be able to place the deflector in a third, substantially closed position which is as flush with the rear of the cutting deck housing as possible, so that the extent to which the deflector projects from the rear of the lawnmower is minimised. This more compact arrangement would allow a smaller carton to be used, with consequential savings in materials, storage and transportation costs. However, there is a need to provide a simple method of conversion back to the two-position deflector arrangement after the lawnmower has been unpacked by the consumer.

One solution to this problem has been disclosed in GB-A-2333435. This arrangement employs a second resilient spring which acts on the deflector between the deflecting position and the closed position. This spring acts in the opposite direction and is stronger than the main spring which biases the deflector downwards, so the deflector will come to rest in the deflecting position but can be forced further in, against the second spring, to the closed position. With this force being applied, the lawnmower is placed in the carton and the carton or other packaging will maintain the deflector in the closed position until it is unpacked, at which point it will spring back to the deflecting position.

In accordance with the present invention, a rotary lawnmower is provided which comprises a cutting deck housing defining a cutting chamber, an aperture in the housing through which grass cuttings are ejected from the cutting chamber in use, and a deflector mounted on the housing outboard of the aperture selectively to deflect the ejected cuttings, in which the deflector is movable under a resilient biasing force from an open position in which the ejected cuttings are undeflected on their path from the aperture, through a deflecting position in which the ejected cuttings are deflected on their path from the aperture, to a closed position in which the aperture is substantially closed, the lawnmower further comprising a movable stop having a first position which holds the deflector in the deflecting position against the resilient biasing force and a second position which allows the deflector to move under the biasing force from the deflecting position to the closed position, the deflector remaining in the closed position in the absence of any external forces.

In at least preferred embodiments, when the movable stop is moved to the second position, the deflector will automatically move to the closed position under the resilient biasing force, in which position it will rest at equilibrium until a force is applied to open the deflector back towards the deflecting position. Therefore, no external force is required to keep the deflector in the closed position. This simplifies the packing procedure and does not require any packaging component to maintain a closing force on the deflector.

Preferably, the action of the movable stop is uni-directional in that it is able to prevent movement of the deflector from the deflecting position to the closed position but always allows movement of the deflector in the reverse direction, from the closed position to the deflecting position.

Preferably, the movable stop is resiliently biased towards the first position. This may be achieved by means of a spring or similar component, but preferably the movable stop is resiliently deformable to the second position. It may be made of a resiliently deformable material, such as acetal for example.

Preferably, the movable stop returns to the first position when the deflector is in the closed position, in the absence of any external forces on the stop. If this is the case, the movable stop may be urged towards the second position automatically as the deflector moves from the closed position to the deflecting position and will return under its resilient bias to the first position once the deflector is in the deflecting position and the urging force is no longer being applied to the movable stop.

To summarise the preferred function of the mechanism, when moving the deflector from the closed position to the deflecting position, the user does not need to apply a force to the movable stop but simply moves the deflector towards the deflecting position against its biasing force. Once the deflector reaches the deflecting position (or just beyond), the movable stop will move or spring back into its first position automatically, and therefore the deflector can be allowed to rest against the stop in the deflecting position or opened up further to the open position for attachment of a grass collection device. This mechanism provides a simple means of setting up the lawnmower for the normal two-mode operation after unpacking by the consumer.

Although it is unlikely that the closed position will be employed very often again after first use, it may be needed if the lawnmower is to be repackaged or transported. To place the deflector in the closed position, the movable stop is urged by an external force to the second position. The deflector may need to be lifted slightly from the deflecting position to allow this. With the movable stop in the second position, the deflector can then be allowed to come to a stop in the closed position under the action of its own biasing force.

In a preferred embodiment, the movable stop is provided on one of the cutting deck housing and the deflector, and the other of the cutting deck housing and the deflector is provided with a surface which contacts the movable stop when the deflector is in the deflecting position and the movable stop is in the first position. The contact surface may be formed by a projection or lip, such as the lip of an aperture for example. When the movable stop is moved to the second position and the deflector is able to move under its biasing force to the closed position, the contact surface will move past the movable stop surface until the deflector comes to rest in the closed position.

In a particularly preferred arrangement, the deflector is biased towards the closed position by a helical torsion spring and the contact surface referred to above is provided by an arm of the torsion spring which engages the movable stop on the cutting deck housing when the deflector is in the deflecting position and the movable stop is in the first position. The movable stop effectively forms a rest against which the torsion spring arm is biased in this position. The arm may be any suitable length, depending on where the contact point between the arm and the movable stop is configured.

The movable stop preferably comprises a resilient projection which has a stop surface at the distal end, the first position being the upright position of the projection in the absence of any lateral forces and the second position being adopted when the distal end is urged to one side under the influence of a lateral force. As mentioned above, the projection may be made of a resiliently deformable material, such as acetal for example.

The projection may comprise an elongate stem and a substantially orthogonal arm at the distal end which forms the stop surface. The projection may also be provided with a fillet surface between the elongate stem and the orthogonal arm. This fillet surface facilitates the uni-directional function of the movable stop, as mentioned above, and works particularly well in conjunction with the contact surface being the arm of the helical torsion spring. The movable stop may be substantially T-shaped and the orthogonal arm may be provided with upwardly-extending end sections to provide a "saddle" support for the deflector. Alternatively, the movable stop may be substantially Y-shaped, which would not then require a fillet surface to be provided, but would require the deflector to be lifted slightly from the deflecting rest position so that the contact surface (e.g. the torsion spring arm) clears the arms of the Y-shape to allow the movable stop to move to the first position.

In preferred embodiments, the movable stop may be provided in the form of an insert or plug which is inserted in an aperture provided in one of the cutting deck housing and the deflector. It may be screwed in, or it may be provided with one or more compressible barbs to provide a snap-fit securement in the aperture.

In the above introduction, the closed position of the deflector does not necessarily require that the aperture is completely closed. It is intended to mean that the aperture is more closed than when the deflector is in the deflecting position. In a practical sense, the closed position is likely to obstruct the outlet aperture to such an extent that the normal flow of grass cuttings from the cutting chamber will not be possible.

An embodiment of the invention will now be described by way of example only and with reference to the accompanying drawings, in which:
Fig. 1 shows a side elevation of a lawnmower in accordance with the invention, in partial cross-section, with the deflector guard in the open position;
Fig. 2 shows a partial side elevation of the lawnmower of Fig. 1 with the deflector guard in the deflecting position;
Fig. 3 shows a partial side elevation of the lawnmower of Fig. 1 with the deflector guard in both the deflecting and the closed positions;
Fig. 4 shows a perspective view of the lawnmower of Fig. 1 as seen looking up at the deflector guard from underneath; and
Fig. 5 shows a perspective view of a movable stop for use in the invention.

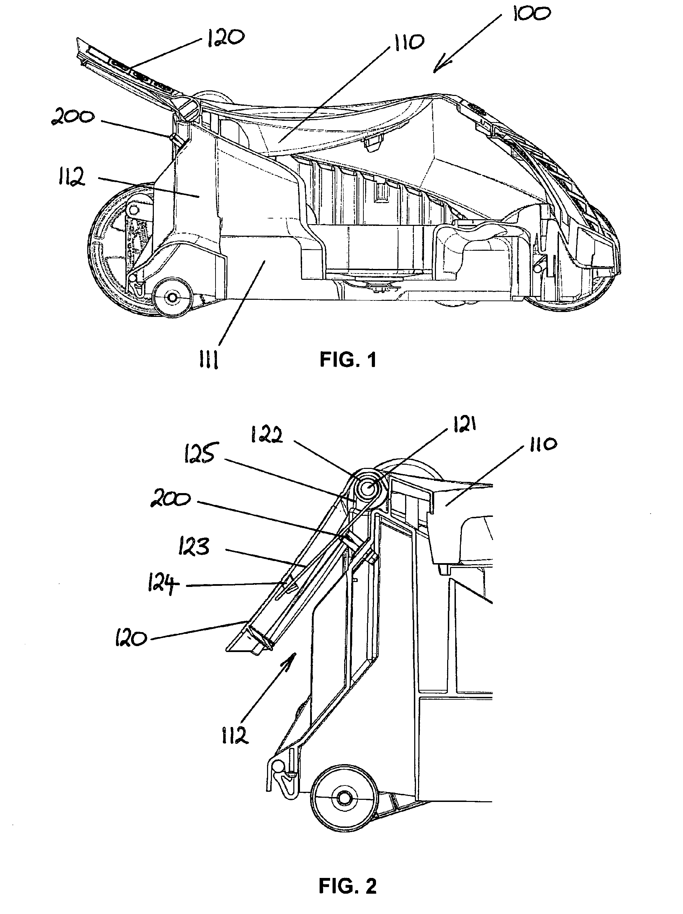

Fig. 1 shows a side view of a lawnmower cutting deck in accordance with the invention, in partial cross-section so that the relevant features of the invention can be seen. Lawnmower 100 has a cutting deck housing shown generally as 110. It has a cutting chamber 111 and an aperture 112 through which grass cuttings are ejected from the cutting chamber 111 in use.

Deflector guard 120 is mounted on the rear of the housing, above and outboard of aperture 112. Deflector guard 120 is generally planar and has the form of a flap which can selectively deflect the cuttings as they are ejected from the aperture. In Fig. 1, deflector guard 120 is shown held in the open position in which the guard does not obstruct aperture 112 and therefore the ejected cuttings are undeflected on their path from the aperture. A grass collection device (not shown) can be attached to the rear of the housing in this configuration, and the cuttings can pass directly into the grass collection device.

Fig. 2 shows a close-up side elevation of the lawnmower 100 with the deflector guard 120 in the deflecting position. The rear wheel of the lawnmower visible in Fig. 1 has been removed from this view for clarity. In this position, aperture 112 is partially open, such that cuttings ejected from the aperture will be deflected downwards to the ground. Deflector guard 120 is mounted on the rear of the housing by means of a horizontal hinge 121. A helical torsion spring 122 is mounted on the hinge axis and biases the deflector guard 120 downwards, towards its deflecting position. As will be discussed below, the helical torsion spring 122 biases the deflector guard 120 beyond the deflecting position to a closed position, but in Fig. 2 it is shown at rest in the deflecting position. One end of helical torsion spring 122 takes the form of an extension arm 123 which pulls the deflector guard 120 down in the absence of an equal or greater force in the opposite direction. The free end of spring extension arm 123 is located in a lug 124 on the underside of deflector guard 120. The other end of helical torsion spring 122 takes the form of a shorter arm 125 which is fixed to cutting deck housing 110.

The other main component of this embodiment of the present invention shown in Figs. 1 and 2 is movable stop 200. As shown more clearly in Fig. 2, movable stop 200 is shown inserted in an aperture in the housing 110. When the deflector guard 120 is in the deflecting position, spring extension arm 123 rests against movable stop 200 under the biasing force of torsion spring 122, the movable stop providing an equal and opposite force to that of the spring 122 in this equilibrium position.

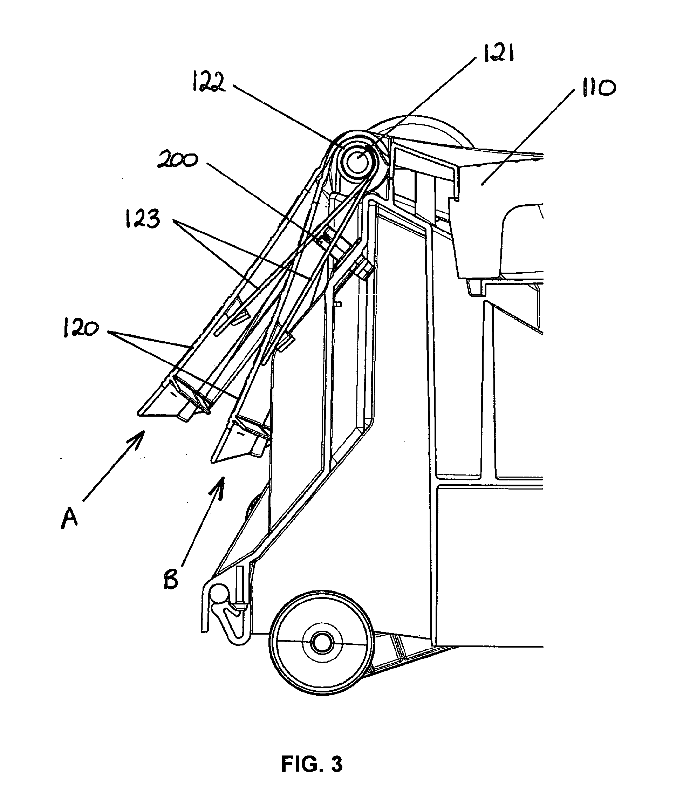

Turning to Fig. 3, a close-up side elevation of the lawnmower 100 is shown with the deflector guard 120 in two alternative positions, the deflecting position (position A) and the closed position (position B). In position A, the deflecting position, spring extension arm 123 rests against movable stop 200 under the biasing force of torsion spring 122. To achieve position B, the closed position, the upper end of movable stop 200 is moved to one side (into or out of the page in this view) to allow spring extension arm 123 to pass beyond the movable stop surface under the biasing force of torsion spring 122 until it comes to rest in the closed position by means of the spring extension arm or a part of the deflector guard coming into contact with the rear of the cutting deck housing 110. In this view, the reduction in the length of the cutting deck achieved by providing a closed position for the deflector guard can clearly be seen.

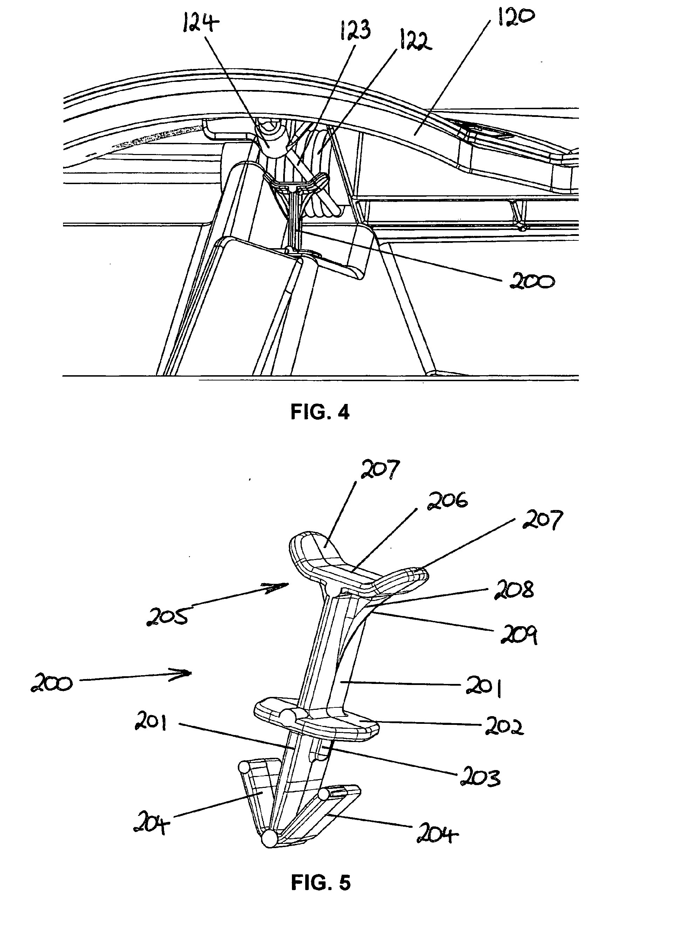

Fig. 4 shows a perspective view of the lawnmower of Fig. 1 as seen looking up at the deflector guard from underneath, more clearly showing the arrangement of the spring extension arm 123 and movable stop 200. In the deflecting position, spring extension arm 123 rests against movable stop 200 (in the first position) under the biasing force of torsion spring 122. To achieve the closed position, the upper end of movable stop 200 is moved to one side (i.e. to the second position) to allow spring extension arm 123 to pass beyond the movable stop surface under the biasing force of torsion spring 122 until it comes to rest in the closed position.

Fig. 5 shows a perspective view of a movable stop 200 for use in the invention. The stop has a central elongate shaft 201 which is generally rectangular in section to provide greater lateral flexibility in one direction and greater rigidity in the other direction. Towards the centre of the elongate shaft 201 there is a flange 202 which sets the limit of insertion of the stop into an aperture in the cutting deck housing 110. Below the flange 202, a projection 203 is provided which engages with a corresponding slot in the aperture, to prevent relative rotation between the stop 200 and the housing 110. Two angled projections 204 are provided at the end of the shaft 201 which have the function of backwardly-extending barbs. They will flex resiliently inwards as the stop 200 is being inserted into the aperture in the housing, and will spring outwards again once the stop is fully inserted, thus securing the stop in position.

The section of movable stop 200 from the flange 202 and above will be the only part of the stop 200 that will be visible in use, once inserted in the cutting deck housing. Above the flange 202, the stop is generally T-shaped, formed by part of the elongate shaft 201 and a generally orthogonal arm 205 at the distal end. The top surface 206 of orthogonal arm 205 forms the stop surface provided by movable stop 200. The ends 207 of orthogonal arm 205 extend upwardly to a degree, to provide a "saddle" support. Fillets 208 are provided between the elongate shaft 201 and the orthogonal arm 205, each of which forms a fillet surface 209.

Elongate shaft 201 is designed to flex between flange 202 and fillets 208, and because of the rectangular section of shaft 201 in this particular embodiment, the shaft will flex in the plane of the T, i.e. to either side, to adopt the second position. In the absence of any urging forces, the shaft 201 will return to its upright, first position due to the resilience of the material from which it is made.

With reference to Fig. 4, spring extension arm 123 may be arranged to be slightly off-centre in relation to the centre of movable stop 200 so that it will sit to the side of the central shaft 201 in the closed position.

Referring to Figs. 4 and 5, when the deflector guard 120 moves from the closed position to the deflecting position, torsion spring extension arm 123 will move up the side of the elongate shaft 201 and, when it comes into contact with fillet surface 209, will gradually urge the movable stop towards the second position, causing it to flex as described above. Fillet surface 209 provides a smooth path of contact between the movable stop 200 and the torsion spring extension arm 123 as it moves upwards relative to the stop 200. The underside of upwardly-projecting end 207 of orthogonal arm 205 provides a smooth continuation of the contact path with the spring extension arm 123. Once spring extension arm 123 clears the outer end of the upwardly-projecting end 207, movable stop 200 will spring back to its upright first position under its own resilience and the deflector can be allowed to rest in the deflecting position with the spring extension arm 123 in contact with top surface 206. Moving the deflector guard in reverse is not possible without lifting the spring extension arm off top surface 206 slightly and positively moving the movable stop 200 to its second position, either side of the first position. This is the uni-directional function of the movable stop.

## Claims

1. A rotary lawnmower (100) comprising a cutting deck housing (110) defining a cutting chamber (111), an aperture (112) in the housing (110) through which grass cuttings are ejected from the cutting chamber (111) in use, and a deflector (120) mounted on the housing (110) outboard of the aperture (112) selectively to deflect the ejected cuttings, in which the deflector (120) is movable under a resilient biasing force from an open position in which the ejected cuttings are undeflected on their path from the aperture (112), to a deflecting position (A) in which the ejected cuttings are deflected (120) on their path from the aperture (112), **characterized in that** the deflector (120) is further movable under said biasing force through said deflecting position (A) to a closed position (B) in which the aperture (112) is substantially closed, and **in that** the lawnmower further comprises a movable stop (200) having a first position which holds the deflector (120) in the deflecting position (A) against the resilient biasing force and a second position which allows the deflector (120) to move under the biasing force from the deflecting position (A) to the closed position (B), the deflector (120) remaining in the closed position (B) in the absence of any external forces.

2. The rotary lawnmower (100) of claim 1, in which the movable stop (200) allows movement of the deflector (120) against the resilient biasing force from the closed position (B) to the deflecting position (A).

3. The rotary lawnmower (100) of claim 1 or 2, in which the movable stop (200) is resiliently biased towards the first position.

4. The rotary lawnmower (100) of claim 3, in which the movable stop (200) is resiliently deformable to the second position.

5. The rotary lawnmower (100) of claim 3 or 4, in which the movable stop (200) returns to the first position when the deflector (120) is in the closed position (B) in the absence of any external forces.

6. The rotary lawnmower (100) of claim 5, in which the movable stop (200) is urged towards the second position automatically as the deflector (120) moves from the closed position (B) to the deflecting position (A) and returns to the first position once the deflector (120) is in the deflecting position (A) and the urging force is no longer being applied to the movable stop (200).

7. The rotary lawnmower (100) of any preceding claim, in which the movable stop (200) is provided on one of the cutting deck housing (110) and the deflector (120), and the other of the cutting deck housing (110) and the deflector (120) is provided with a surface which contacts the movable stop (200) when the deflector (120) is in the deflecting position (A) and the movable stop (200) is in the first position.

8. The rotary lawnmower (100) of claim 7, in which the contact surface provided on the other of the cutting deck housing (110) and the deflector (120) is formed by a projection or lip.

9. The rotary lawnmower (100) of claim 7, in which the movable stop (200) is provided on the cutting deck housing (110) and in which the deflector (120) is biased towards the closed position (B) by a helical torsion spring (122), the contact surface being provided by an arm of the torsion spring (122) which engages the movable stop (200) when the deflector (120) is in the deflecting position (A) and the movable stop (200) is in the first position, the movable stop (200) forming a rest against which the torsion spring arm (123) is biased in this position.

10. The rotary lawnmower (100) of any preceding claim, in which the movable stop (200) comprises a resilient projection which has a stop surface (205, 206) at the distal end, the first position being the upright position of the projection in the absence of any lateral forces and the second position being adopted when the distal end is urged to one side under the influence of a lateral force.

11. The rotary lawnmower (100) of claim 10, in which the projection comprises an elongate stem (201) and a substantially orthogonal arm (205) at the distal end which forms the stop surface (206).

12. The rotary lawnmower (100) of claim 11, in which the projection is provided with a fillet surface (209) between the elongate stem (201) and the orthogonal arm (205).

13. The rotary lawnmower (100) of any preceding claim, in which the movable stop (200) is substantially T-shaped.

14. The rotary lawnmower (100) of claim 13, in which the orthogonal arm (205) of the T-shaped stop is provided with upwardly-extending end sections (207).

15. The rotary lawnmower (100) of any preceding claim, in which the movable stop (200) is provided in the form of a plug which is inserted in an aperture (112) provided in one of the cutting deck housing (110) and the deflector (120).

## Patentansprüche

1. Kreiselrasenmäher (100), umfassend ein Schneidwerkgehäuse (110), das eine Schneidkammer (111) definiert, eine Öffnung (112) im Gehäuse (110), durch die Grasschnitt im Gebrauch aus der Schneidkammer (111) ausgestoßen wird, und einen Ablenker (120), der außerhalb der Öffnung (112) am Gehäuse (110) montiert ist, um den ausgestoßenen Grasschnitt gezielt abzulenken, wobei der Ablenker (120) unter einer federnden Vorspannkraft aus einer offenen Position, in der der ausgestoßene Grasschnitt auf seiner Bahn von der Öffnung (112) nicht abgelenkt wird, zu einer Ablenkposition (A), in der der ausgestoßene Grasschnitt auf seiner Bahn von der Öffnung (112) abgelenkt (120) wird, bewegbar ist, **dadurch gekennzeichnet, dass** der Ablenker (120) ferner unter der federnden Vorspannkraft durch die Ablenkposition (A) hindurch zu einer geschlossenen Position (B), in der die Öffnung (112) im Wesentlichen geschlossen ist, bewegbar ist und dass der Rasenmäher ferner einen beweglichen Anschlag (200) umfasst, der eine erste Position, die den Ablenker (120) gegen die federnde Vorspannkraft in der Ablenkposition (A) hält, und eine zweite Position hat, in der sich der Ablenker (120) unter der Vorspannkraft aus der Ablenkposition (A) zu der geschlossenen Position (B) bewegen kann, wobei der Ablenker (120) bei Fehlen jeglicher äußerer Kräfte in der geschlossenen Position (B) bleibt.

2. Kreiselrasenmäher (100) nach Anspruch 1, wobei der bewegliche Anschlag (200) eine Bewegung des Ablenkers (120) gegen die federnde Vorspannkraft aus der geschlossenen Position (B) zu der Ablenkposition (A) gestattet.

3. Kreiselrasenmäher (100) nach Anspruch 1 oder 2, wobei der bewegliche Anschlag (200) federnd zu der ersten Position hin vorgespannt ist.

4. Kreiselrasenmäher (100) nach Anspruch 3, wobei der bewegliche Anschlag (200) federnd zu der zweiten Position hin deformierbar ist.

5. Kreiselrasenmäher (100) nach Anspruch 3 oder 4, wobei der bewegliche Anschlag (200) bei Fehlen jeglicher äußerer Kräfte zu der ersten Position zurückkehrt, wenn der Ablenker (120) in der geschlossenen Position (B) ist.

6. Kreiselrasenmäher (100) nach Anspruch 5, wobei der bewegliche Anschlag (200) automatisch zu der zweiten Position hin gedrängt wird, wenn sich der Ablenker (120) aus der geschlossenen Position (B) zu der Ablenkposition (A) bewegt, und zu der ersten Position zurückkehrt, sobald der Ablenker (120) in der Ablenkposition (A) ist und die Drängkraft nicht mehr auf den beweglichen Anschlag (200) ausgeübt wird.

7. Kreiselrasenmäher (100) nach einem der vorhergehenden Ansprüche, wobei der bewegliche Anschlag (200) am Schneidwerkgehäuse (110) oder am Ablenker (120) vorgesehen ist und das jeweils andere Element - Schneidwerkgehäuse (110) oder Ablenker (120) - mit einer Fläche versehen ist, die den beweglichen Anschlag (200) kontaktiert, wenn der Ablenker (120) in der Ablenkposition (A) ist und der bewegliche Anschlag (200) in der ersten Position ist.

8. Kreiselrasenmäher (100) nach Anspruch 7, wobei die an dem jeweils anderen Element Schneidwerkgehäuse (110) oder Ablenker (120) vorgesehene Kontaktfläche durch einen Vorsprung oder eine Lippe gebildet ist.

9. Kreiselrasenmäher (100) nach Anspruch 7, wobei der bewegliche Anschlag (200) am Schneidwerkgehäuse (110) vorgesehen ist und wobei der Ablenker (120) durch eine Schraubendrehfeder (122) zu der geschlossenen Position (B) hin vorgespannt ist, wobei die Kontaktfläche durch einen Arm der Drehfeder (122) bereitgestellt ist, der den beweglichen Anschlag (200) in Eingriff nimmt, wenn der Ablenker (120) in der Ablenkposition (A) ist und der bewegliche Anschlag (200) in der ersten Position ist, wobei der bewegliche Anschlag (200) eine Anlage bildet, gegen die der Drehfederarm (123) in dieser Position vorgespannt ist.

10. Kreiselrasenmäher (100) nach einem der vorhergehenden Ansprüche, wobei der bewegliche Anschlag (200) einen federnden Vorsprung umfasst, der am distalen Ende eine Anschlagfläche (205, 206) hat, wobei die erste Position bei Fehlen jeglicher seitlicher Kräfte die aufrechte Position des Vorsprungs ist, und die zweite Position eingenommen wird, wenn das distale Ende unter dem Einfluss einer seitlichen Kraft zur Seite gedrängt wird.

11. Kreiselrasenmäher (100) nach Anspruch 10, wobei der Vorsprung einen länglichen Schaft (201) und am distalen Ende einen im Wesentlichen orthogonalen Arm (205) umfasst, der die Anschlagfläche (206) bildet.

12. Kreiselrasenmäher (100) nach Anspruch 11, wobei der Vorsprung zwischen dem länglichen Schaft (201) und dem orthogonalen Arm (205) mit einer Kehlfläche (209) versehen ist.

13. Kreiselrasenmäher (100) nach einem der vorhergehenden Ansprüche, wobei der bewegliche Anschlag (200) im Wesentlichen T-förmig ist.

14. Kreiselrasenmäher (100) nach Anspruch 13, wobei der orthogonale Arm (205) des T-förmigen Anschlags mit sich nach oben erstreckenden Endabschnitten (207) versehen ist.

15. Kreiselrasenmäher (100) nach einem der vorhergehenden Ansprüche, wobei der bewegliche Anschlag (200) in der Form eines Stopfens vorgesehen ist, der in eine im Schneidwerkgehäuse (110) oder im Ablenker (120) vorgesehene Öffnung (112) eingeführt ist.

## Revendications

1. Tondeuse à gazon rotative (100) comprenant un carter de plateau de coupe (110) définissant une chambre de coupe (111), une ouverture (112) dans le carter (110) à travers laquelle les fragments d'herbe sont éjectés de la chambre de coupe (111) lors de l'utilisation, et un déflecteur (120) installé sur le carter (110) à l'extérieur de l'ouverture (112) de façon à dévier sélectivement les fragments éjectés, dans laquelle le déflecteur (120) est mobile sous l'effet d'une force de sollicitation élastique d'une position ouverte, dans laquelle les fragments éjectés ne sont pas déviés sur leur trajectoire depuis l'ouverture (112), à une position de déviation (A), dans laquelle les fragments éjectés sont déviés (120) sur leur trajectoire depuis l'ouverture (112), **caractérisée en ce que** le déflecteur (120) est en outre mobile sous l'effet de ladite force de sollicitation en passant par ladite position de déviation (A) jusqu'à une position fermée (B), dans laquelle l'ouverture (112) est essentiellement fermée, et **en ce que** la tondeuse à gazon comprend en outre une butée mobile (200) présentant une première position qui maintient le déflecteur (120) dans la position de déviation (A) à l'encontre de la force de sollicitation élastique et une seconde position qui permet au déflecteur (120) de se déplacer sous l'effet de la force de sollicitation de la position de déviation (A) à la position fermée (B), le déflecteur (120) restant dans la position fermée (B) en l'absence de toute force extérieure.

2. Tondeuse à gazon rotative (100) selon la revendication 1, dans laquelle la butée mobile (200) permet le déplacement du déflecteur (120) à l'encontre de la force de sollicitation élastique de la position fermée (B) à la position de déviation (A).

3. Tondeuse à gazon rotative (100) selon la revendication 1 ou 2, dans laquelle la butée mobile (200) est sollicitée de manière élastique vers la première position.

4. Tondeuse à gazon rotative (100) selon la revendication 3, dans laquelle la butée mobile (200) est déformable de manière élastique jusqu'à la seconde position.

5. Tondeuse à gazon rotative (100) selon la revendication 3 ou 4, dans laquelle la butée mobile (200) retourne à la première position lorsque le déflecteur (120) se trouve dans la position fermée (B) en l'absence de toute force extérieure.

6. Tondeuse à gazon rotative (100) selon la revendication 5, dans laquelle la butée mobile (200) est incitée à se déplacer vers la seconde position automatiquement, tandis que le déflecteur (120) se déplace de la position fermée (B) à la position de déviation (A), et retourne à la première position une fois que le déflecteur (120) se trouve dans la position de déviation (A) et que la force d'incitation cesse d'être appliquée à la butée mobile (200).

7. Tondeuse à gazon rotative (100) selon l'une quelconque des revendications précédentes, dans laquelle la butée mobile (200) est placée sur l'un parmi le carter de plateau de coupe (110) et le déflecteur (120), et l'autre parmi le carter de plateau de coupe (110) et le déflecteur (120) est doté d'une surface qui vient en contact avec la butée mobile (200) lorsque le déflecteur (120) se trouve dans la position de déviation (A) et la butée mobile (200) se trouve dans la première position.

8. Tondeuse à gazon rotative (100) selon la revendication 7, dans laquelle la surface de contact prévue sur l'autre parmi le carter de plateau de coupe (110) et le déflecteur (120) est formée par une partie saillante ou une lèvre.

9. Tondeuse à gazon rotative (100) selon la revendication 7, dans laquelle la butée mobile (200) est placée sur le carter de plateau de coupe (110) et dans laquelle le déflecteur (120) est sollicité vers la position fermée (B) par un ressort de torsion hélicoïdal (122), la surface de contact étant formée par un bras du ressort de torsion (122) qui coopère avec la butée mobile (200) lorsque le déflecteur (120) se trouve dans la position de déviation (A) et la butée mobile (200) se trouve dans la première position, la butée mobile (200) formant un appui contre lequel le bras du ressort de torsion (123) est sollicité dans cette position.

10. Tondeuse à gazon rotative (100) selon l'une quelconque des revendications précédentes, dans laquelle la butée mobile (200) comprend une partie saillante élastique qui comporte une surface de butée (205, 206) au niveau de l'extrémité distale, la première position étant la position verticale de la partie saillante en l'absence de toute force latérale et la seconde position étant adoptée lorsque l'extrémité distale est incitée à se déplacer vers un côté sous l'influence d'une force latérale.

11. Tondeuse à gazon rotative (100) selon la revendication 10, dans laquelle la partie saillante comprend une tige allongée (201) et un bras essentiellement perpendiculaire (205) au niveau de l'extrémité distale qui forme la surface de butée (206).

12. Tondeuse à gazon rotative (100) selon la revendication 11, dans laquelle la partie saillante est dotée d'une surface formant congé (209) entre la tige allongée (201) et le bras perpendiculaire (205).

13. Tondeuse à gazon rotative (100) selon l'une quelconque des revendications précédentes, dans laquelle la butée mobile (200) est essentiellement en forme de T.

14. Tondeuse à gazon rotative (100) selon la revendication 13, dans laquelle le bras perpendiculaire (205) de la butée en forme de T est doté de sections d'extrémité (207) s'étendant vers le haut.

15. Tondeuse à gazon rotative (100) selon l'une quelconque des revendications précédentes, dans laquelle la butée mobile (200) est réalisée sous la forme d'un organe d'accouplement mâle qui est inséré dans une ouverture (112) formée dans le carter de plateau de coupe (110) ou le déflecteur (120).
